Europäisches Patentamt

European Patent Office

Office européen des brevets

(11) Veröffentlichungsnummer: **0 321 895 B1**

(12) # EUROPÄISCHE PATENTSCHRIFT

(45) Veröffentlichungstag der Patentschrift: **03.06.92**

(51) Int. Cl.⁵: **B01D 46/04**

(21) Anmeldenummer: **88121197.3**

(22) Anmeldetag: **17.12.88**

(54) **Abschlussdeckel für Luft- und Gasfilter.**

(30) Priorität: **23.12.87 DE 3743789**

(43) Veröffentlichungstag der Anmeldung:
**28.06.89 Patentblatt 89/26**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI NL SE**

(56) Entgegenhaltungen:
**EP-A- 0 091 673**
**EP-A- 0 225 613**
**DE-A- 2 300 806**
**GB-A- 788 873**

(73) Patentinhaber: **Bühler GmbH**
**Ernst-Amme-Strasse 19**
**W-3300 Braunschweig(DE)**

(72) Erfinder: **Heckel, Hans**
**Emil-Berg-Strasse 7**
**W-3300 Braunschweig(DE)**
Erfinder: **Wiersdorff, Dieter, Dipl.-Ing.**
**Mühlenweg 11**
**W-3174 Wedelheine(DE)**

(74) Vertreter: **Révy von Belvárd, Peter**
**Im Lindengarten 18**
**CH-9242 Oberuzwil(CH)**

## Beschreibung

Die Erfindung bezieht sich auf einen Filter mit einem Abschlussdeckel für den Reingasraum von Luft- und Gasfiltern nach dem Oberbegriff des Anspruches 1.

Filter mit Abschlussdeckeln dieser Art sind aus der EP-OS 0 225 613 bekannt. Zur Ermöglichung des Zuganges für Wartungsarbeiten , bei denen im Falle eines Produktwechsels oder bei Defekten die Filterschläuche nach oben herausgezogen und neue bzw. gereinigte Filterschläuche von oben her wieder eingesetzt werden, sind diese Abschlussdeckel entweder um eine an der Oberkante des Filtergehäuses angeordnete Achse in eine senkrechte Stellung hochklappbar, oder sie sind nach oben abhebbar angeordnet.

In beiden Fällen sind aufgrund der schon wegen der geforderten Druckstossfestigkeit kräftigen Dimensionierung der Deckel und der daran angeordneten Spüllufteinrichtungen mit Ventilen, Druckbehältern und Spülluftlanzen erhebliche Lasten zu bewegen, was entsprechend aufwendige Hubmittel erfordert.

Ferner muss zumindest bei freistehenden Filtern für das Wartungspersonal eine zusätzliche begehbare Fläche am Aussenumfang des Filtergehäuses vorgesehen werden, und bei grossen Filterdurchmessern besteht für das Personal gleichwohl eine gewisse Schwierigkeit hinsichtlich des Zugriffs zu den im Zentrum befindlichen Filterschläuchen. Schliesslich sind ausser den Hubmitteln noch kräftige Beschläge erforderlich, um den Deckel nach Beendigung der Wartungsarbeiten für den eigentlichen Filterbetrieb druckstossfest gegenüber dem Filtergehäuse zu verriegeln.

Im Falle der hochklappbaren Filterdeckel ergibt sich weiterhin als störend eine relativ grosse Windangriffsfläche, was entsprechend kräftige Abstützorgane erfordert, und im Falle der abhebbaren Filterdeckel wirkt sich der für das Arbeiten unter schwebenden Lasten erforderliche sicherheitstechnische Aufwand kostensteigernd aus.

In der EP-A 0 091 673 wird vorgeschlagen, die an der Trennplatte angebrachten Filter insgesamt herauszuziehen. Dies ist aber wohl nur bei Kleinfiltern möglich, wogegen diese Konstruktion für Grossfilter zweifellos zu schwer und unhandlich wird.

Der Erfindung liegt die Aufgabe zugrunde, einen Filter mit einem Abschlußdeckel der eingangs genannten Art zu schaffen, der sich durch einen Verzicht auf aufwendige und sperrige Hubmittel sowie auf eine zusätzliche begehbare Fläche für das Wartungspersonal auszeichnet. Dabei sollen gleichzeitig störende Windangriffsflächen und der Aufenthalt unter schwebender Last vermieden und ein gleichmässig guter Zugang zu sämtlichen Filterschläuchen ermöglicht werden.

Erfindungsgemäß wird diese Aufgabe durch die kennzeichnenden Merkmale des Anspruches 1 gelöst.

Nach der erfindungsgemäßen Lehre ermöglicht der Abschlußdeckel durch seine Drehbarkeit in Verbindung mit der Wartungsöffnung und den abnehmbaren Teilen der Spüllanzen selbst den Zugang zu den Filterschläuchen. Hierbei dient er gleichzeitig als begehbare Fläche für das Wartungspersonal, das die erforderlichen Drehschritte z.B. durch Ausübung von Körperkräften gegenüber einem ortsfesten, aus Sicherheitsgründen meist ohnehin vorhandenen Geländer in jeder gewünschten Weise selbst bewirken kann.

Insbesondere läßt sich durch die Merkmale des Anspruches 2 eine sichere Verriegelung des Abschlußdeckels für den Betriebszustand des Filters mittels einer nur geringfügigen Hubbewegung und entsprechend einfachen Mitteln erreichen.

Eine konstruktiv einfache und vom technischen Aufwand her nur wenig anspruchsvolle Lösung zur Sicherstellung der Dreh- und Hubbeweglichkeit des Abschlußdeckels sowie des Formschlusses bei seiner Verriegelung in der Betriebsstellung des Filters zeigen die Merkmale der Ansprüche 3 bis 5 auf.

Die Anforderungen an eine praktikable Montage des Abschlußdeckels auf dem Filtergehäuse sowie hinsichtlich einer betriebsgerechten, robusten und einfach zu handhabenden Mechanik für die Hubbewegung des Deckels erfüllen die Merkmale des Anspruches 6.

Geht man davon aus, daß gerade wegen der vorteilhaften, nur geringfügigen Hubbewegung des Abschlußdeckels zwischen den Betriebszuständen "Drehen" und "Verriegeln" diese von außen deutlich erkennbar sein sollten, so leistet das Merkmal des Anspruches 7 hierzu einen nützlichen Beitrag. Im Zusammenhang hiermit sichern die Merkmale des Anspruches 8 in einfacher, vorteilhafter Weise die richtige Position des Abschlußdeckels, wenn dieser in der Betriebsstellung verriegelt werden soll.

Ein Ausführungsbeispiel der Erfindung ist in den Zeichnungen dargestellt und wird im folgenden näher beschrieben.

Es zeigen:

    Fig. 1     ein erfindungsgemäßes, mit dem Abschlußdeckel ausgerüstetes Oberteil eines Filters im Schnitt,

    Fig. 2     den Filter bzw. den Abschlußdeckel in der Draufsicht bei abgenommener Wartungsklappe,

    Fig. 3     einen im wesentlichen durch einen Rollenbock geführten Schnitt entlang der Linie III-III in Fig. 1 mit der Rolle in Verdrehstellung des Abschlußdeckels,

Fig. 4    einen Schnitt entlang der Linie IV-IV in Fig. 1 mit der Rolle in Verriegelungsstellung des Abschlußdeckels und

Fig. 5    einen Schnitt durch den Rollenbock entlang der Linie V-V in Fig. 1

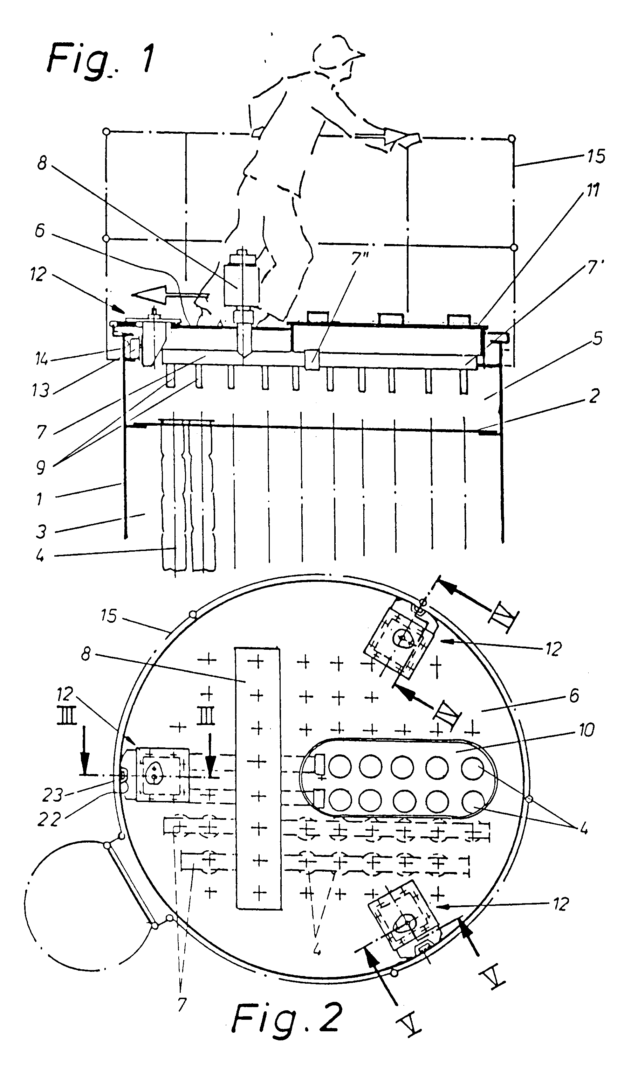

Wie aus Fig. 1 ersichtlich, befindet sich im oberen Bereich des Filtergehäuses 1 eine horizontale Trennwand 2, in die zahlreiche, in den Staubgasraum 3 hineinragende Filterschläuche 4 eingelassen sind. Oberhalb der Trennwand 2 befindet sich der Reingasraum 5, der durch den Abschlußdeckel 6 nach oben hin verschlossen ist.

In an sich bekannter Weise ist der Abschlußdeckel 6 an seiner Unterseite mit zahlreichen Spülluftlanzen 7 besetzt, die zur Filterabreinigung aus einem Druckluftbehälter 8 über Spülluftventile periodisch und stoßweise beaufschlagt werden, wobei die Druckluftstöße über eine Vielzahl an den Spülluftlanzen angeordneter Ausblasdüsen 9 in die Filterschläuche 4 eingeleitet werden, die - in der Trennwand 2 hängend - den Ausblasdüsen in einem gewissen, strömungstechnisch optimierten Abstand gegenüberliegen.

Den Zugang zu den Filterschläuchen 4 gewährleistet einerseits eine in dem Abschlußdeckel 6 befindliche Wartungsöffnung 10, die sich vom Zentrum des Filters bis in seinen Randbereich und somit in radialer Richtung über alle Filterschläuche erstreckt. Die Breite dieser Wartungsöffnung, die im Betriebszustand des Filters mittels einer Klappe 11 verschlossen ist, erfaßt zweckmäßigerweise etwa zwei nebeneinanderliegende Filterreihen. Zusätzlich ist es für den Zugang zu den Filterschläuchen 4 erforderlich, die im Bereich der Wartungsöffnung 10 befindlichen Teile der Spülluftlanzen 7 zu entfernen, was dadurch ermöglicht wird, daß die beiden entsprechenden Spülluftlanzen geteilt ausgeführt sind und ihre Teile 7' über Steckmuffen 7'' mit den festen Teilen der Spülluftlanzen 7 verbindbar sind.

Es ist aus den Figuren 1 und 2 ersichtlich, daß der Abschlußdeckel 6 mittels dreier in Rollenböcken 12 gelagerter Rollen 13 in einem den oberen Rand bzw. den Abschluß des Filtergehäuses bildenden, kreisringförmigen U-Profil 14 um die Filterlängsachse drehbar geführt ist und beispielsweise von der angedeuteten, auf ihm befindlichen Arbeitsperson durch Abstützen gegenüber dem am Filtergehäuse 1 befestigten Geländer 15 bewegbar ist, wobei die Wartungsöffnung 10 sukzessive sämtliche Filterschläuche 4 überstreicht und so einen problemlosen Zugang zu diesen ermöglicht.

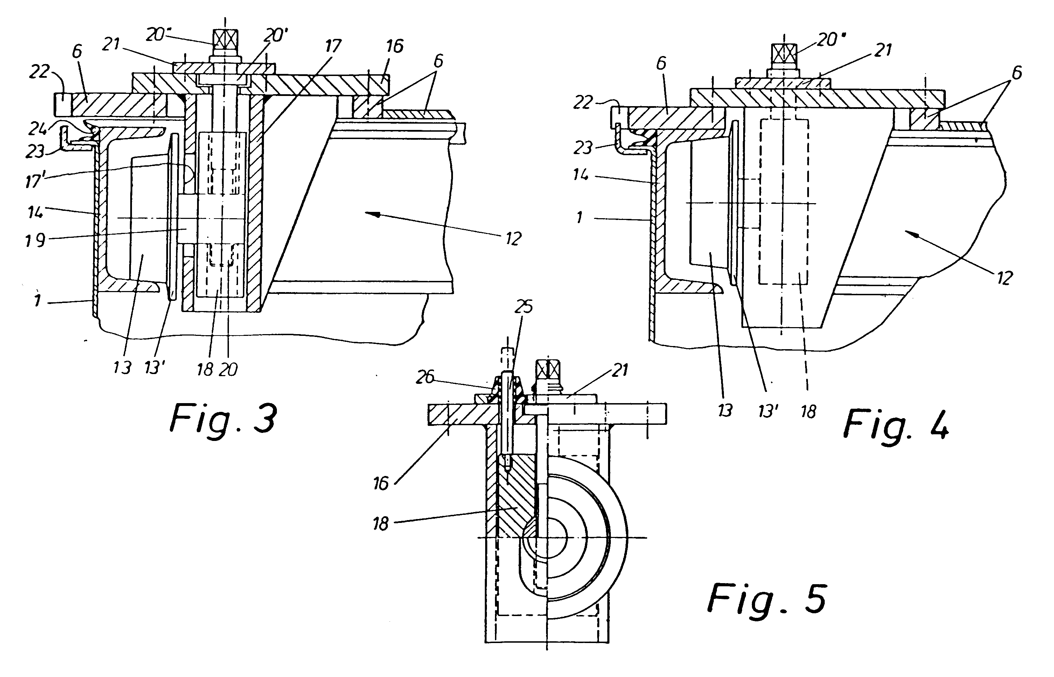

Im einzelnen ist ein solcher Rollenbock 12 in seiner Einbausituation am Abschlußdeckel 6 bzw. gegenüber dem U-Profil 14 aus den Figuren 3 und 4 erkennbar. Jeder Rollenbock 12 ist als selbständige Baueinheit ausgebildet, die in entsprechende Ausnehmungen des Abschlußdeckels 6 einsetzbar und mit diesem fest verbindbar ist. Hierbei besteht der Rollenbock 12 aus einer oberen, mit dem Abschlußdeckel 6 verschraubbaren Tragplatte 16 und einem an dieser angeschweißten Führungsschacht 17 für einen Gleitstein 18. In dem Gleitstein 18 ist die Achse 19 der mit einem Spurkranz 13' versehenen Rolle 13 angeordnet, und der Führungsschacht 17 ist mit einer länglichen Ausnehmung 17' für die Achse 19 versehen, so daß diese und mit ihr die Rolle 13 einer Hubbewegung des Gleitsteins 18 in dem Führungsschacht 17 folgen kann. Diese Hubbewegung ist mittels einer den Gleitstein 18 durchdringenden, in der Achse 19 geführten Gewindespindel 20 ausführbar, die sich mittels eines Bundes 20' an einer entsprechenden Ausnehmung der Tragplatte 16 bzw. an einer mit dieser verschraubten Deckplatte 21 abstützt und mit einem Vierkant 20'' zur Betätigung versehen ist.

In Figur 3 befindet sich die Rolle 13 in ihrer unteren Endposition, in der sie auf dem unteren Schenkel des das Filtergehäuse 1 oben aussteifenden U-Profils 14 aufliegt und der Abschlußdeckel 6 von dem oberen Schenkel des U-Profils 14 etwas abgehoben ist. In dieser Position ist der Abschlußdeckel somit verdrehbar.

Zur Verriegelung des Abschlußdeckels 6 gegenüber dem Filtergehäuse 1 bzw. dem U-Profil 14 wird dieser zunächst in die korrekte Position gedreht, in der alle Ausblasdüsen 9 genau den ihnen zugeordneten Filterschläuchen 4 gegenüberliegen. Diese Position wird durch Paßorgane in Gestalt je einer Randausnehmung 22 am Abschlußdeckel 6 im Bereich der Rollenböcke 12 und je einer diesen Randausnehmungen zugeordneten Paßzunge 23 des Filtergehäuses 1 sichergestellt. Sodann werden durch Verdrehen der Gewindespindeln 20 die Gleitsteine 18 und damit die Rollen 13 in die in Fig. 3 dargestellte Position gefahren, in der sie dem oberen Schenkel des U-Profils anliegen, und wodurch der Abschlußdeckel 6 unter gleichzeitigem Zusammenpressen der Dichtung 24 in seinem Randbereich fest auf der Außenfläche des oberen Schenkels des U-Profils aufliegt. Dies ist die Verriegelungsposition des Abschlußdeckels 6, in der dieser auch etwaigen, durch Explosionsvorgänge innerhalb des Filters ausgelösten Druckstößen zu widerstehen vermag. Es versteht sich, daß im Falle sehr großer Filtergehäuse und/oder bei erhöhten Anforderungen an den Explosionsschutz die Anzahl der Rollenböcke 12 und damit auch der Verriegelungselemente beliebig vergrößert werden kann.

Wie schließlich Fig. 5 erkennen läßt, ist an dem Gleitstein 18 noch ein Positionsanzeigestift 25 angeordnet, der in der Tragplatte 16 und in der Deckplatte 21 mittels einer Dichtung 26 geführt ist und nach außen erkennbar herausragt. In der Verdrehstellung des Abschlußdeckels 6 ist dieses Herausragen auf ein Minimum beschränkt, während der Positionsanzeigestift in der Verriegelungsstellung um den maximalen Hub der Rollen 13 bzw. des Gleitsteins 18 ausgefahren ist und dadurch den Verriegelungszustand deutlich erkennbar anzeigt.

Es besteht die Möglichkeit, die Bewegung bzw. die Endstellungen des Positionsanzeigestiftes 25 mittels Schaltern oder dgl. zur Steuerung von Betriebszuständen des Filters zu nutzen.

Bezugszeichenliste

| 1 | Filtergehäuse |
| 2 | Trennwand |
| 3 | Staubgasraum |
| 4 | Filterschlauch |
| 5 | Reingasraum |
| 6 | Abschlußdeckel |
| 7 | Spülluftlanze |
| 7' | Teil Von 7 |
| 7'' | Steckmuffe |
| 8 | Druckluftbehälter |
| 9 | Ausblasdüse |
| 10 | Wartungsöffnung |
| 11 | Wartungsklappe |
| 12 | Rollenbock |
| 13 | Laufrolle |
| 13' | Spurkranz Von 13 |
| 14 | U-Profil |
| 15 | Geländer |
| 16 | Tragplatte |
| 17 | Führungsschacht |
| 17' | Ausnehmung an 17 |
| 18 | Gleitstein |
| 19 | Achse |
| 20 | Gewindespindel |
| 20' | Bund an 20 |
| 20'' | Vierkant an 20 |
| 22 | Randausnehmung |
| 23 | Paßzunge |
| 24 | Dichtung |
| 25 | Positionsanzeigestift |
| 26 | Dichtung |

**Patentansprüche**

1. Filter mit einem Abschlussdeckel und einem Reingasraum (5) sowie einer Vielzahl in einem Staubgasraum (3) angeordneter, in den Reingasraum (5) mündender Filterkörper, wie Filterschläuche oder Filtersäcke, denen jeweils von sogenannten Spülluftlanzen (7) ausgehende Ausblasdüsen (9) einer deckelseitig angeordneten, periodisch und stossweise druckluftbetätigten Spüllufteinrichtung (8) mit Abstand gegenüberliegen,
dadurch gekennzeichnet,
dass der Abschlussdeckel (6) mit Hilfe einer Drehführung (13,14) um die Filterlängsachse drehbar geführt und mit mindestens einer, während einer Deckelumdrehung sukzessive alle Filterkörpermündungen (4) freigebenden, verschliessbaren Wartungsöffnung (10) versehen ist, und dass die unterhalb dieser befindlichen Teile (7') der Spülluftlanzen (7) abnehmbar ausgebildet sind.

2. Filter nach Anspruch 1,
dadurch gekennzeichnet, dass
das Filtergehäuse (1) selbst kreisförmigen Querschnitt besitzt und unmittelbar mit der Drehführung (13,14) im Bereiche seines Randes versehen ist.

3. Filter nach Anspruch 1 oder 2,
dadurch gekennzeichnet,
dass der Abschlussdeckel in Richtung der Filterlängsachse hubbeweglich geführt und in druckdichter Anlage an den oberen Rand des Filtergehäuses (1) gegenüber diesem formschlüssig verriegelbar ist.

4. Filter nach einem der Ansprüche 1 bis 3,
dadurch gekennzeichnet,
dass am oberen Ende des Filtergehäuses (1) die Drehführung, insbesondere mit einem kreisförmigen U-Profil, für den Abschlussdeckel (6) vorgesehen ist, welche Drehführung vorzugsweise ein mit seiner Oeffnung nach innen weisendes kreisförmiges U-Profil (14) und eine Rollfläche für Rollen (13) des Abschlussdeckels (6) aufweist, und dass zweckmässig der Deckel in seinem Randbereich mit mindestens drei, vorzugsweise gleichmässig beabstandeten, Laufrollen (13) versehen ist.

5. Filter nach Anspruch 4,
dadurch gekennzeichnet,
dass die Laufrollen (13) mit Spurkränzen (13') versehen sind.

6. Filter nach Anspruch 4 oder 5,
dadurch gekennzeichnet,
dass der Schenkelabstand des U-Profils (14) grösser als der Durchmesser der Laufrollen (13) ist und die Achsen (19) der Laufrollen (13) gegenüber dem Abschlussdeckel (6) höhenverstellbar sind.

7. Filter nach einem der Ansprüche 1 bis 6,
dadurch gekennzeichnet,
dass für jede Laufrolle (13) der Drehführung (13,14) ein an dem Abschlussdeckel (6) montierbarer, aus einer oberen Tragplatte (16) und einem Führungsschacht (17) für einen Gleitstein (18) gebildeter Rollenbock (12) vorgesehen ist, wobei die Achse (19) der Laufrolle (13) in dem Gleitstein (18) angeordnet und von einer diesen durchdringenden, in der Tragplatte (16) gelagerten Gewindespindel (20,20',20''} erfasst ist.

8. Filter nach Anspruch 7,
dadurch gekennzeichnet,
dass an dem Gleitstein (18) ein im Bereich der Tragplatte (16) dichtend geführter und aus dieser herausragender Positionsanzeigestift (25) angeordnet ist.

9. Filter nach einem der Ansprüche 1 bis 8,
dadurch gekennzeichnet,
dass er an seinem äusseren Umfang mit mindestens zwei in ungleicher Umfangsteilung angebrachten Passorganen (22) versehen ist, die mit komplementären, am oberen Rand des Filtergehäuses (1) angeordneten Organen (23) zusammenwirken.

**Claims**

1. Filter with a closure cover and a clean-gas chamber (5), also a plurality of filter elements such as filter hoses or filter bags which are arranged in a dust-gas chamber (3), and open into the clean-gas chamber (5), and opposite the said elements respectively there are situated, at a spacing, discharge nozzles (9) extending from so-called scavenging air jet pipes (7) of a scavenging air device (8) which is arranged at the cover side and which is operated by compressed air in bursts or pulses periodically, characterised in that the closure cover (6) is guided rotatably about the filter longitudinal axis with the use of a rotation guide means (13, 14), and is provided with at least one closable maintenance aperture (10) which exposes all the filter element mouths (4) successively during one cover revolution, and that the parts (7') of the scavenging air jet pipes (7) which are situated below said aperture are made detachable.

2. Filter according to claim 1, characterised in that the filter housing (1) itself is of circular cross-section and is provided directly with the rotation guide means (13, 14) in the region of its rim.

3. Filter according to claim 1 or 2, characterised in that the closure cover is guided to be movable with a lifting action in the direction of the filter longitudinal axis and can be positively locked relatively to the filter housing (1) in pressure-tight abutment on the upper rim of the said housing.

4. Filter according to one of claims 1 to 3, characterised in that the rotation guide means, which has especially a circular member which is a U-section, is provided for the closure cover (6) at the upper end of the filter housing (1), the said rotation guide means comprising preferably a circular U-section (14) with its opening directed inwardly, and a surface for wheels (13) of the closure cover (6) to roll on, and that advantageously the cover is provided in its rim region with at least three preferably uniformly spaced running wheels (13).

5. Filter according to claim 4, characterised in that the running wheels (13) are provided with wheel flanges (13').

6. Filter according to claim 4 or 5, characterised in that the spacing of the flanges of the U-section (14) is greater than the diameter of the running wheels (13), and the axles (19) of the running wheels (13) are adapted to be adjustable as to height relatively to the closure cover (6).

7. Filter according to one of claims 1 to 6, characterised in that a wheel bracket (12) is provided for each running wheel (13) of the rotation guide means (13, 14), which bracket is mountable on the closure cover (6) and is constituted by an upper supporting plate (16) and a guide duct (17) for a slide block (18), the axle (19) of the running wheel (13) being arranged in the slide block (18) and being acted upon by a screwthreaded spindle (20, 20', 20") which extends through said block and is mounted in the supporting plate (16).

8. Filter according to claim 7, characterised in that a position indication pin (25) guided in sealing-tight manner in the region of the supporting plate (16) and projecting therefrom is arranged on the slide block (18).

9. Filter according to one of claims I to 8, characterised in that it is provided at its outer periphery with at least two locating elements (22) which are situated at non-identical peripheral spacings and which co-operate with complementary elements (23) situated at the upper edge of the filter housing (1).

**Revendications**

1. Filtre, comportant un couvercle de fermeture et une enceinte de gaz épuré, ainsi qu'une pluralité de corps filtrants, tels que des manches filtrantes ou des sacs filtrants, disposés dans une enceinte de gaz poussiéreux (3), débouchant dans l'enceinte de gaz épuré (5), en face de chacun desquels sont disposées, à distance, des buses de soufflage (9), partant ce que l'on appelle des lances de soufflage (7), appartenant à un dispositif d'air de balayage (8), disposé côté couvercle, actionné périodiquement et par à coup par de l'air comprimé, caractérisé en ce que

le couvercle de fermeture (6) est guidé, tournant autour de l'axe longitudinal de filtre, à l'aide d'un guidage tournant (13,14), et pourvu d'au moins une ouverture d'entretien (10) obturable, dégageant successivement toutes les embouchures de corps filtrant (4) pendant une rotation du couvercle, et que les parties (7'), situés audessous de cette ouverture d'entretien (10), des lances d'air de balayage (7) sont réalisées extractibles.

2. Filtre selon la revendication 1, caractérisé en ce que le carter de filtre (1) même présente une section transversale circulaire e(t est pourvu directement du guidage tournant (13,14) dans les zones de sa bordure.

3. Filtre selon la revendication 1 ou 2, caractérisé en ce que le couvercle de fermeture est déplacé mobile suivant une course en direction de l'axe longitudinal de filtre et verrouillable, en appui étanche, sur le bord supérieur du carter de filtre (1), par ajustement de forme par rapport à ce dernier.

4. Filtre selon l'une des revendications 1 à 3, caractérisé en ce qu'à l'extrémité supérieure du carter de filtre (1), le guidage tournant est prévu, en particulier, avec un profilé en U de forme circulaire, pour le couvercle de fermeture (6), le guidage tournant présentant de préférence un profilé en U (14) de forme circulaire, avec son ouverture tournée vers l'intérieur, et une surface de roulage, pour des galets de roulement (13) du couvercle de fermeture (6), et que, de manière appropriée, le couvercle est pourvu, dans sa zone de bordure, d'au moins trois galets de roulement (13), écartés de préférence régulièrement.

5. Filtre selon la revendication 4, caractérisé en ce que les galets de roulement (13) sont pourvus de boudins (13').

6. Filtre selon la revendication 4 ou 5, caractérisé en ce que l'espacement des ailes du profilé en U (14) est supérieur au diamètre des galets de roulement (13) et les axes (19) des galets de roulement (13) sont réglables en hauteur par rapport au couvercle de fermeture (6).

7. Filtre selon l'une des revendications 1 à 6, caractérisé en ce que pour chaque galet de roulement (13), du guidage tournant (13,14) est prévu un bloc à galet (12), montable sur le couvercle de fermeture (6), formé d'une plaque support supérieure (16) et d'un puits de guidage (17) pour un patin de coulissement (18), l'axe (19) du galet de roulement (13) étant disposé dans le patin de coulissement (18) et saisi par une broche filetée (20,20',20") traversant le patin de coulissement (18), montée dans la plaque de support (16).

8. Filtre selon la revendication 7, caractérisé en ce que, sur le patin de coulissement (18) est disposé une tige d'indication de position (25), guidée étanche dans la zone de la plaque de support (16) et en émergeant.

9. Filtre selon l'une des revendications 1 à 8, caractérisé en ce que, sur sa périphérie extérieure, il est pourvu d'au moins deux organes de saisie (22) montés suivant une division périphérique inégale, qui coopèrent avec des organes complémentaires (23), disposés sur le bord supérieur du carter de filtre (1).

Fig. 1

Fig. 2

7

Fig. 4

Fig. 5

Fig. 3

8